# EUROPÄISCHE PATENTANMELDUNG

(11) **EP 0 822 342 A2**
(43) Veröffentlichungstag der Anmeldung: **04.02.1998**
(21) Anmeldenummer: 97112582.8
(22) Anmeldetag: 23.07.1997
(51) Int. Cl.: F15B 15/08

(54) **Pneumatisch betätigbarer Linearantrieb**

(30) Priorität: 02.08.1996 DE 19631260
(71) Anmelder: ROBERT BOSCH GMBH, 70442 Stuttgart (DE)
(72) Erfinder: Wiesenfeldt, Albrecht, 71336 Waiblingen (DE); Koban, Johannes, 70178 Stuttgart (DE)

(57) **Zusammenfassung**

Ein pneumatisch betätigbarer, kolbenstangenlos arbeitender Linearantrieb (10) weist ein Nuten (28) aufweisendes Basisprofil (11) auf. Mit den Nuten (28) ist wenigstens eine Trägerschiene (24, 32) verbindbar, in der eine als Führung für ein Traglagerelement (20, 34) dienende Führungsstange (22, 33) einrastbar ist. Jeder Führungsstange (22, 33) ist wenigstens ein Traglagerelement (20, 34) zugeordnet, die mittels eines Laufwagens (35, 35a) miteinander verbunden sind. Der erfindungsgemäße pneumatisch betätigbare Linearantrieb (10) hat den Vorteil, daß der Montageaufwand gegenüber herkömmlichen Linearantrieben verringert ist.

## Beschreibung

### Stand der Technik

Die Erfindung betrifft einen pneumatisch betätigbaren Linearantrieb. Ein derartiger bekannter Linearantrieb weist ein schienenförmiges Basisprofil auf, mit dem eine Führungsschiene für einen Trägerschlitten verbunden ist. Da das Basisprofil ein auch für andere Anwendungen verwendetes Standardbauelement ist, müssen zum Verbinden der Führungsschiene mit dem Basisprofil beispielsweise zusätzliche Löcher für Befestigungsschrauben in das Basisprofil gebohrt werden. Dadurch entsteht ein beträchtlicher Bearbeitungs- und Montageaufwand. Weiterhin ist der Einsatzbereich des bekannten Linearantriebs in bezug auf die Baugröße und die Traglast des auf der Führungsschiene gleitend geführten Trägerschlittens durch die Baugrößen der Führungsschiene und des Basisprofils beschränkt.

### Vorteile der Erfindung

Der erfindungsgemäße pneumatisch betätigbare Linearantrieb mit den Merkmalen des Anspruchs 1 hat demgegenüber den Vorteil, daß der Bearbeitungs- und Montageaufwand an den einzelnen Bauteilen minimiert ist. Dies wird erfindungsgemäß dadurch erreicht, daß die Führungsstangen für die Traglager mittels einer Trägerschiene mit dem Basisprofil verbindbar sind, wobei die Verbindung der einzelnen Bauteile miteinander zumindest teilweise durch einfaches Einrasten erfolgt.

Weitere Vorteile und vorteilhafte Weiterbildungen des erfindungsgemäßen pneumatisch betätigbaren Linearantriebs ergeben sich aus den Unteransprüchen und der Beschreibung.

### Zeichnung

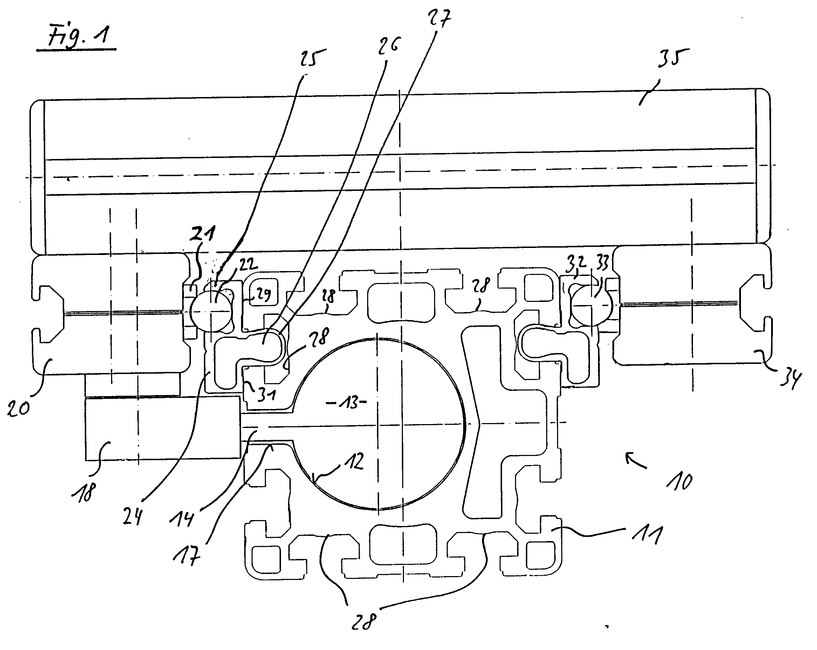

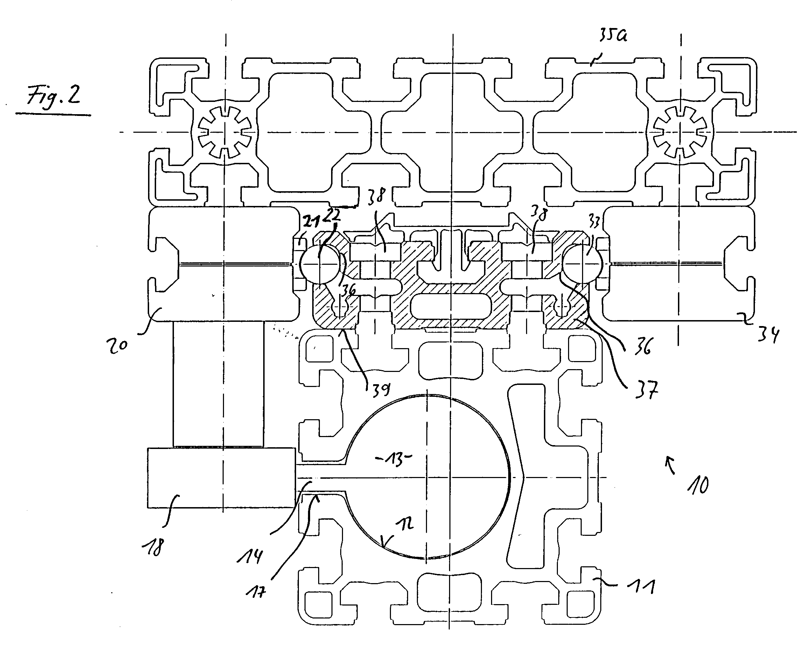

Zwei Ausführungsbeispiele der Erfindung sind in der Zeichnung dargestellt und werden in der nachfolgenden Beschreibung näher erläutert. Es zeigen die Figur 1 einen Querschnitt durch einen ersten Linearantrieb und die Figur 2 einen Querschnitt durch einen zweiten Linearantrieb.

### Beschreibung der Ausführungsbeispiele

Der in der Figur 1 dargestellte pneumatisch betätigbare, kolbenstangenlos arbeitende Linearantrieb 10 weist ein schienenförmiges, im Strangziehverfahren aus einer Aluminiumlegierung hergestelltes Basisprofil 11 auf. Im Basisprofil 11 ist eine Längsführung 12 ausgebildet, in der ein Kolben 13 gleitend geführt ist. An den jeweiligen Stirnseiten des Basisprofils 11 sind an sich bekannte Ventil- und Steuerelemente zum Bewegen des Kolbens 13 in der Längsführung 12 angeordnet.

Vom Kolben 13 geht ein Fortsatz 14 aus, der einen in der Wandung des Basisprofils 11 ausgebildeten und mit der Längsführung 12 verbundenen Längsschlitz 17 durchdringt. Der Fortsatz 14 ist mit einem Mitnehmer 18 verbunden. Am Mitnehmer 18 ist ein erstes Traglager 20 befestigt, in dessen längsgeteiltem Gehäuse bevorzugt zwei Rollen 21 drehbar gelagert sind. Die Rollen 21 laufen auf einer ersten Führungsstange 22 ab, die zwischen dem Traglager 20 und dem Basisprofil 11 angeordnet und mit diesem verbunden ist.

Die Verbindung zwischen der Führungsstange 22 und dem Basisprofil 11 erfolgt mittels einer ersten Trägerschiene 24. Die Trägerschiene 24 besteht wie das Basisprofil 11 ebenfalls aus einer Aluminiumlegierung, und sie ist im Strangziehverfahren hergestellt. Zur Aufnahme der Führungsstange 22 hat die Trägerschiene 24 einen im wesentlichen U-förmig ausgesparten, elastisch verformbaren Abschnitt 25, in den die Führungsstange 22 form- und kraftschlüssig einrastbar ist. Auf der dem Basisprofil 11 zugewandten Seite hat die Trägerschiene 24 einen Hohlraum 26 aufweisenden Fortsatz 27, der in eine im wesentlichen T-förmig ausgebildete Nut 28 des Basisprofils 11 einrastbar ist. Die Trägerschiene 24 ist somit durch den Fortsatz 27 sowie die in Anlagekontakt mit der entsprechenden Seitenfläche des Basisprofils 11 stehenden ebenen Anlageflächen 29, 31 der Trägerschiene 24 mit dem Basisprofil 11 unverrückbar verbunden.

Im Ausführungsbeispiel sind an jeder der vier Seitenflächen des Basisprofils 11 je zwei im wesentlichen T-förmige Nuten 28 ausgebildet, die allesamt identisch sind. Die Nuten 28 dienen üblicherweise zur Befestigung von Anbauteilen, Winkeln o.ä. an das Basisprofil 11 mittels in den Nuten 28 angeordneten Nutsteinen oder Hammermuttern. Entsprechend der Baugröße des Basisprofils 11 können jedoch auch an jeder der Seitenflächen des Basisprofils 11 nur eine oder aber auch mehrere Nuten ausgebildet sein, die ggf. unterschiedliche Querschnittsformen aufweisen. Ferner sind auch Basisprofile 11 mit Seitenflächen ohne Nuten denkbar. Je nach Baugröße, also beispielsweise der Breite B des Basisprofils 11, weisen die Nuten 28 weiterhin verschiedene Nennweiten auf.

Auf der der ersten Trägerschiene 24 gegenüberliegenden Seite des Basisprofils 11 ist in identischer Weise eine zweite Trägerschiene 32 mit einer zweiten Führungsstange 33 und einem zweiten Traglager 34 angeordnet. Mit den beiden Oberseiten der Traglager 20, 34 ist oberhalb des Basisprofils 11 ein Laufwagen 35 verbunden. Der mittels des Mitnehmers 18 mit dem Kolben 13 verbundene Laufwagen 35 dient beispielsweise zum Betätigen von Elementen, oder als Transportschlitten für Bauteile zwischen zwei Bearbeitungsstationen.

Bei dem in der Figur 2 dargestellten zweiten Ausführungsbeispiel sind die beiden Führungsstangen 22, 33 in einander gegenüberliegenden Aussparungen 36 einer gemeinsamen Trägerschiene 37 eingerastet. Die Trägerschiene 37, deren Breite b in etwa der Breite B des Basisprofils 11 entspricht, ist wiederum mittels Befestigungselementen, wie Schrauben 38, mit der Oberseite 39 des Basisprofils 11 verbindbar, wobei die Schrauben 38 in bereits in dem Basisprofil 11 ausgebildete, T-förmige Nuten 28a eingreifen, in denen Nutsteine oder Hammermuttern zum Fixieren der Trägerschiene 37 mittels der Schrauben 38 angeordnet sind.

In Abwandlung der beiden oben dargestellten Ausführungsbeispiele ist es möglich, jedem Basisprofil 11 nur jeweils eine Führungsstange 22, 33 zuzuordnen. Dadurch können Anordnungen ausgebildet werden, bei denen zwei Basisprofile 11 parallel zueinander verlaufen, an deren zueinander abgewandten Seitenflächen die jeweilige Führungsstange 22, 33 angeordnet ist. Somit können auf einfache Weise auch Anordnungen für höhere Belastungen ausgebildet werden.

## Patentansprüche

1. Pneumatisch betätigbarer Linearantrieb (10), mit einem schienenförmigen Basisprofil (11), in dem eine Längsführung (12) für einen Kolben (13) ausgebildet ist, der mittels eines Mitnehmerelementes (18) mit einem Traglagerelement (20, 34) verbunden ist, wobei das Traglagerelement (20, 34) entlang einer Führung verschiebbar ist, die mit dem Basisprofil (11) verbunden ist, dadurch gekennzeichnet, daß die Führung wenigstens eine zylindrisch ausgebildete Stange (22, 33) aufweist, die in jeweils eine Aufnahme (25, 36) in wenigstens einer mit wenigstens einem Basisprofil (11) verbindbaren Profilschiene (24, 37) einrastbar sind, daß jeder Stange (22, 33) wenigstens ein Traglagerelement (20, 34) zugeordnet ist, und daß die Traglagerelemente (20, 34) mittels eines Elementes (35) miteinander verbunden sind.

2. Pneumatisch betätigbarer Linearantrieb nach Anspruch 1, dadurch gekennzeichnet, daß die Profilschiene (24) einen Fortsatz (27) aufweist, der in eine Nut (28) des Basisprofils (11) einrastbar ist.

3. Pneumatisch betätigbarer Linearantrieb nach Anspruch 2, dadurch gekennzeichnet, daß in dem Fortsatz (27) ein Hohlraum (26) ausgebildet ist.

4. Pneumatisch betätigbarer Linearantrieb nach Anspruch 1 oder 2, dadurch gekennzeichnet, daß der Linearantrieb (10) kolbenstangenlos ausgebildet ist.

5. Pneumatisch betätigbarer Linearantrieb nach einem der Ansprüche 1 bis 4, dadurch gekennzeichnet, daß die Stangen (22, 33) im Bereich der Seitenflächen des Basisprofils (11) angeordnet sind.

6. Pneumatisch betätigbarer Linearantrieb nach einem der Ansprüche 1 bis 5, dadurch gekennzeichnet, daß der Abstand der beiden Stangen (22, 33) zueinander wenigstens in etwa der Breite (B) des Basisprofils (11) entspricht.
